# EUROPÄISCHE PATENTSCHRIFT

(11) **EP 1 852 617 B1**
(45) Veröffentlichungstag und Bekanntmachung des Hinweises auf die Patenterteilung: **15.01.2014**
(21) Anmeldenummer: 06009030.5
(22) Anmeldetag: 02.05.2006
(51) Int. Cl.: F16C 11/06

(54) **Einrichtung zur Befestigung eines Dichtungsbalgs**
Device for fixing of a sealing bellow
Dispositif de fixation d'un soufflet d'étanchéité

(43) Veröffentlichungstag der Anmeldung: 07.11.2007
(73) Patentinhaber: Carl Freudenberg KG, 69469 Weinheim (DE)
(72) Erfinder: Knorr, Rainer, 10557 Berlin (DE); Gützlaff, Markus, 71069 Sindelfingen (DE); Peic, Michael, 70198 Stuttgart (DE)

(56) Entgegenhaltungen:
- EP-A- 0 918 168
- EP-A1- 0 481 212
- DE-A1- 1 575 708
- DE-A1-102006 006 799
- DE-U1-202005 002 407
- US-A- 4 572 693

## Beschreibung

### Technisches Gebiet

Die Erfindung befasst sich mit einer Einrichtung zur Befestigung eines Dichtungsbalgs, umfassend einen Dichtungsbalg, bei dem eines der Enden des Dichtungsbalgs mit einem radialen und einem axialen Dichtberelch an dem den radialen Dichtbereich des Kugelzapfens bildenden Abschnitt des Konusteils des Kugelzapfengelenks befestigbar ist.

Bei der Befestigung eines Dichtungsbalgs an dem zugehörigen Maschinenteil, werden offene Spannringe benutzt, die je nach Auswinkelung des zu schützenden Gelenks zu unterschiedlichen Anpresskräften am Umfang der Befestigungsstelle führen. Die Dichtkräfte sind umlaufend nicht homogen verteilt. Außerdem biegt sich der offene Spannring in der Anwendung auf Grund seiner Biegeelastizität auf, was im Bereich der scharfkantigen Enden des Spannrings zu einer Beschädigung des Nutgrundes am Dichtungsbalg und zu einem dort beginnenden Risswachstum führen kann. Auch die axiale Dichtung des Dichtungsbalgs ist nicht zufriedenstellend, da die unterstützende Anpresswirkung des Spannrings auf die axial ausgerichtete Staublippe nicht ausreichend ist und es zu Undichtigkeiten kommen kann. Dieses ist insbesondere ungünstig bei Kugelzapfengelenken, bei denen sowohl in radialer als auch in axialer Richtung eine sichere Abdichtung erreicht werden soll.

### Stand der Technik

Durch die DE 20 2005 002 407 U1 ist ein Dichtungsbalg für ein Kugelgelenk bekannt geworden, bei dem im Kontaktbereich zwischen Dichtungsbalg und Gelenkzapfenaufnahme der Dichtungsbaig mit einem Gleitring versehen ist. Der Gleitring besteht aus einem korrosionsfreien Werkstoff, z. B. aus Polyamid oder Polyoseimethylen. Er stellt eine Abdichtung zum Gelenkzapfen her, um den Bereich zwischen Gelenkgehäuse und Gelenkzapfen zu schützem und ermöglicht gleichzeitig eine Dreh- und Kippbewegung des Kugelgelenks. Seine Befestigung am Dichtungsbalg erfolgt über eine Ausnehmung im Balg, in die ein Befestigungsabschnitt des Gleitrings einrastet. Eine dauerhafte Abdichtung ist jedoch nicht erreichbar.

### Darstellung der Erfindung

Der Erfindung liegt die Aufgabe zu Grunde, die oben genannten Nachteile abzustellen und eine Einrichtung zur Befestigung eines Dichtungsbalgs zu schaffen, mit der höchste Anforderungen an die Dichtheit des Dichtungsbalgs erreicht werden, indem eine gleichmäßige Abdichtung durch homogenen Anpressdruck auf dem gesamten Umfang der Dichtung als auch eine verbesserte Axialdichtung erreicht wird.

Die Lösung der gestellten Aufgabe wird mit den Merkmalen des Anspruchs 1 erreicht. Die Unteransprüche 2 bis 15 stellen vorteilhafte Ausgestaltungen des Erfindungsgedankens dar.

Der grundsätzliche Lösungsgedanke besteht darin, dass bei einer Einrichtung der eingangs genannten Art das verwendete Spannelement als geschlossener Spannring ausgebildet ist. An Stelle des bisher verwendeten offenen Spannrings aus gebogenem Draht, wird ein geschlossener Spannring eingesetzt, durch den eine homogene radiale und auch axiale Abdichtung erreicht wird. Diese Art der Befestigung bringt vor allem bei Kugelzapfengelenken am Fahrwerk und an der Lenkung besondere Vorteile. Während der bisher verwendete offene Spannring aus einem endlosen Draht durch Abschlagen und Biegen gefertigt wurde, kann der geschlossene Spannring beispielsweise aus Spritzgussteilen hergestellt werden. Die scharfen Kanten, die bisher durch das Abschlagen des Drahtes entstanden sind, können somit vermieden werden. Auch eine Fertigung aus einem Blechbiegeteil ist möglich, wobei darauf zu achten ist, dass etwaige Blechkanten in Bereiche gelegt werden, die nicht in Kontakt mit dem Dichtungsbalg kommen können.

Der bei der Erfindung einzusetzende Dichtungsbalg kann wie bisher ausgeführt werden. So wird der Dichtungsbalg an seinen Dichtbereichen auf seiner radialen Außenseite mit einer den Spannring aufnehmenden Ringnut versehen.

Der Nutgrund der Ringnut wird bevorzugt abgerundet ausgebildet. Dabei ist eine halbkreisförmige Ausgestaltung des Nutgrunds günstig.

Der Spannring wird mit seiner radial innen liegenden Oberfläche an die Form des Nutgrunds angepasst. In weiterer vorteilhafter Ausgestaltung wird der Spannring im Querschnitt gesehen, mit einer radial langgestreckten Form versehen, deren Seitenwände parallel zueinander verlaufen. Durch diese Form wird die Wirkung des Spannrings bezüglich der axialen Abdichtung deutlich verbessert. Ganz generell ist zu bemerken, dass die Abkehr vom Kreisquerschnitt es erlaubt, die axiale Anpressung der Dichtung individuell einstellen zu können. So ist es in Weiterführung dieses Gedankens möglich, den Spannring mit einer oberhalb der Nut liegenden und an die Schulter des Dichtungsbalgs angrenzenden Verbreiterung zu versehen.

Hierdurch wird zum einen die axial wirkende Dichtlippe unterstützt und zum anderen bei abgewinkeltem Gelenk auf der gezogenen Balgwand-Seite der axiale Anpressdruck über die Kraftlinie Balgwand - Spannring - Axialdichtung erhöht.

Gemäß einer anderen Ausführungsform ist der Spannring mit einem die Staublippe radial und axial abstützenden Kragen versehen. Der Kragen und die Verbreiterung sind an ihren äußeren Rändern abgerundet, so dass keine Beschädigungen am Dichtungsbalg eintreten können.

Der radiale Dichtbereich des Dichtungsbalgs ist mit radialen, am zylindrischen Abschnitt des Gelenks anliegenden Dichtlippen versehen. Außerdem hat der axiale Dichtbereich des Dichtungsbalgs wenigstens eine axial ausgerichtete, am Stützring des Gelenks anliegende Staublippe. Diese Staublippe ist mit einer axialen Stützfläche versehen, die parallel zur Gegenfläche am Stützring ausgerichtet ist. Außerdem kann die Staublippe trapezförmig ausgebildet sein.

Der Spannring selbst kann aus einem Kunststoff bestehen und im Spritzgießverfahren hergestellt sein. Möglich ist aber auch, den Spannring als Schalenelement aus einem Blech im Biegeverfahren herzustellen. Hierfür wird als Blechvorlage ein Rohr benutzt, von dem entsprechende Teile abgelängt und gebogen werden.

### Kurzbeschreibung der Zeichnung

Anhand der in der Zeichnung dargestellten Ausführungsbeispiele wird die Erfindung nachstehend näher erläutert

Es zeigt
- Fig. 1: ein Kugelzapfengelenk im Schnitt mit einem geschlossenen Spannring;
- Fig. 2: die Dichtbereiche nach Fig. 1 in vergrößerter Darstellung;
- Fig. 3 und 4: die Dichtbereiche mit geschlossenem Spannring mit einem Stützkragen bzw. einem Stützkragen und einer Verbreiterung;
- Fig. 5 und 6: die Dichtbereiche mit geschlossenem Spannring, hergestellt im Blech-Biegeverfahren.

### Ausführung der Erfindung

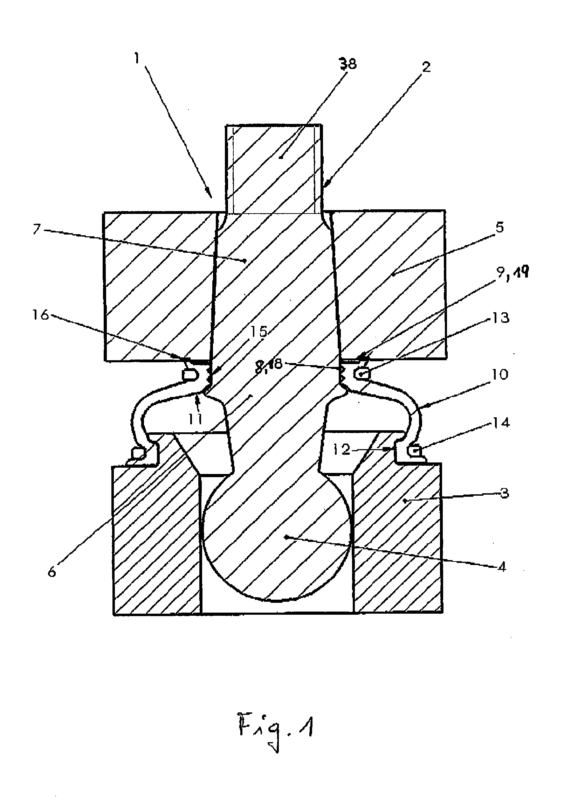

Das in der Fig. 1 gezeigte Kugelzapfengelenk 1 besteht aus dem Kugelzapfen 2, dessen Kugelkopf 4 im Gelenkgehäuse 3 gehalten ist, sowie dem Konusteil 7, das von dem Hebelauge 5 einer Strebe oder Achsschenkels erfasst wird. Der Kugelkopf 4 wird vom Halsstück 6 gehalten, während das Hebelauge 5 den Konusteil 7 des Zapfens 2 erfasst. An den Konusteil 7 schließt das Gewindeteil 38 des Zapfens 2 an. Der Zapfen 2 ist außerdem mit einem zylindrischen Abschnitt 41 versehen, der den radialen Dichtbereich 8 des Zapfens 2 darstellt. In axialer Richtung wird die Abdichtung am Dichtbereich 19 am Hebelauge 5 vorgenommen. Der Dichtungsbalg 10 liegt mit seinen Enden 11 und 12 am Gelenkgehäuse 3 bzw. Zapfen 2 an- Mit dem Dichtbereich 8 am Zapfen 2 und mit dem Dichtbereich 9 am Hebelauge 5. Die Dichtkraft des Dichtungsbalgs 10 wird durch die an entsprechender Stelle eingesetzten geschlossenen Spannringe 13 und 14 unterstützt. Im radialen Dichtbereich 8 des Dichtungsbalgs 10 ist der Dichtungsbalg 10 mit den Dichtlippen 15 versehen-Während im axialen Dichtbereich 9 des Dichtungsbalgs 10 wenigstens eine axial ausgerichtete und am Hebelauge 5 anliegende Staublippe 16 angebracht ist. Diese Staublippe 16 übernimmt gleichzeitig die Abdichtfunktion gegenüber dem Hebelauge 5. Der Zapfen 2 mit dem Hebelauge 5 ist drehbar gegenüber dem Gelenkgehäuse 3. Die Befestigung des anderen Endes 12 des Dichtungsbalgs 10 am Gelenkgehäuse 3 erfolgt über den Spannring 14. Der Spannring 14 ist im Allgemeinen ein in zwei Lagen gewickelter offener Ring mit rechteckigem Querschnitt. Die Dichtlippen bzw. Staublippen können hier entfallen, da der Dichtungsbalgs 10 fest mit dem Gelenkgehäuse 3 verbunden ist.

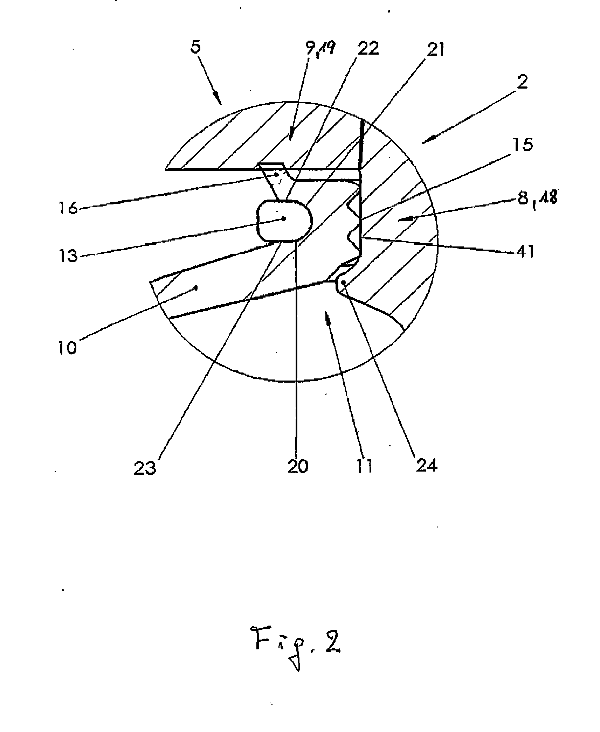

In der Fig. 2 sind die Dichtbereiche 8 und 9 des Dichtungsbalgs 10 und die Dichtbereiche 18 und 19 am Zapfen 2 bzw. am Hebelauge 5 vergrößert dargestellt. Das Ende 11 des Dichtungsbalgs 10 ist auf seiner radialen Außenseite mit der Ringnut 20 versehen, die den geschlossenen Spannring 13 aufnimmt. Der Nutgrund 21 der Ringnut 20 ist halbkreisförmig ausgebildet. Der Spannring 13 ist mit seiner radial innen liegenden Oberfläche an die Form des Nutgrunds 21 angepasst. Der Spannring 13 hat im Querschnitt gesehen eine lang gestreckte Form und seine Seitenwände 22, 23 sind parallel zueinander ausgerichtet. Durch diese Ausbildung des geschlossenen Spannrings 13 werden die Dichtlippen 15 und die Staublippe 16 an die entsprechenden Flächen der Dichtbereiche 18 bzw. 19 angedrückt und zwar gleichmäßig auf ihrem gesamten Umfang. Die am Zapfen 2 vorhandene Wulst 24 verhindert, dass bei Extrembelastungen der Dichtungsbalg 10 vom Zapfen 2 abrutschen kann.

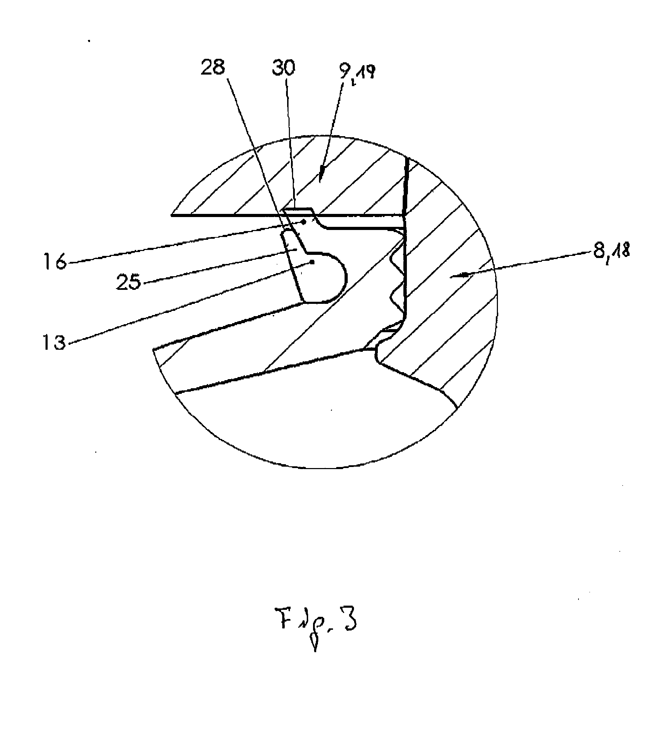

Die Ausführungsform nach der Fig. 3 entspricht außer dem Spannring 13 in allen anderen Teilen der Fig. 2. Der Spannring 13 hat in diesem Fall jedoch einen Kragen 25, durch den die Staublippe 16 sowohl radial als auch axial abgestützt wird. Hierdurch wird eine verbesserte Abdichtung am Dichtbereich 9 bzw. 19 erzielt.

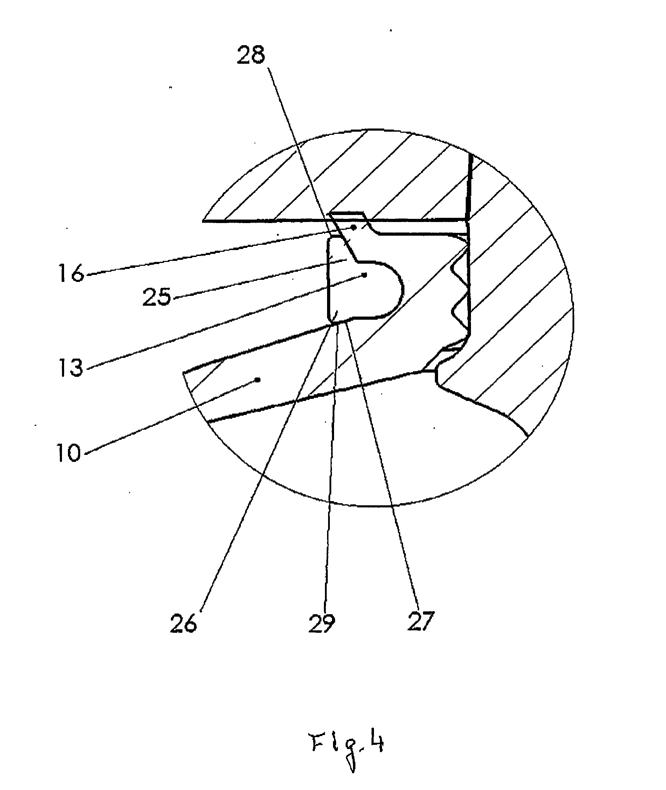

Die Fig. 4 zeigt einen Spannring 13, der neben dem Kragen 25 zusätzlich noch mit einer Verbreiterung 26 versehen ist, die an einer Schulter 27 des Dichtungsbalgs 10 anliegt. Sowohl der Kragen 25 als auch die Verbreiterung 26 sind an ihren äußeren Rändern 28, 29 abgerundet.

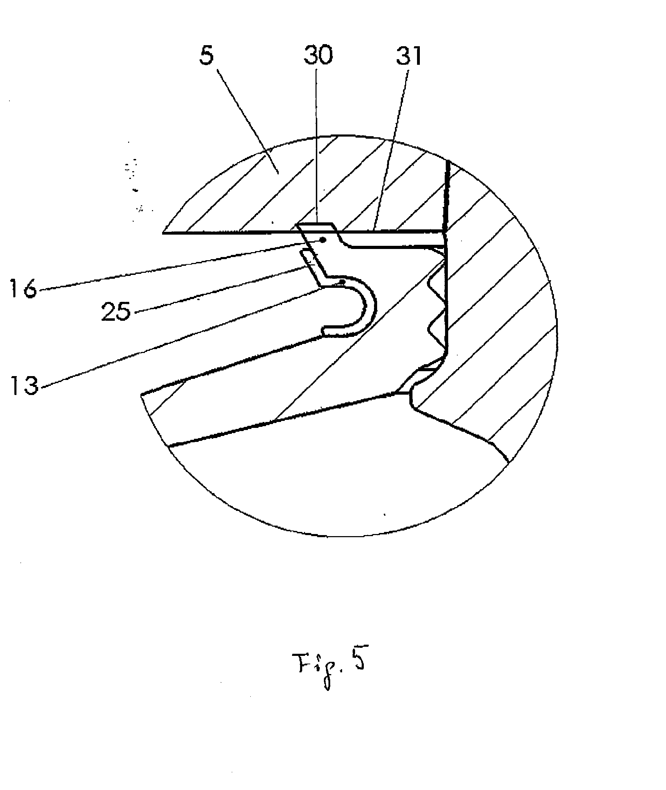

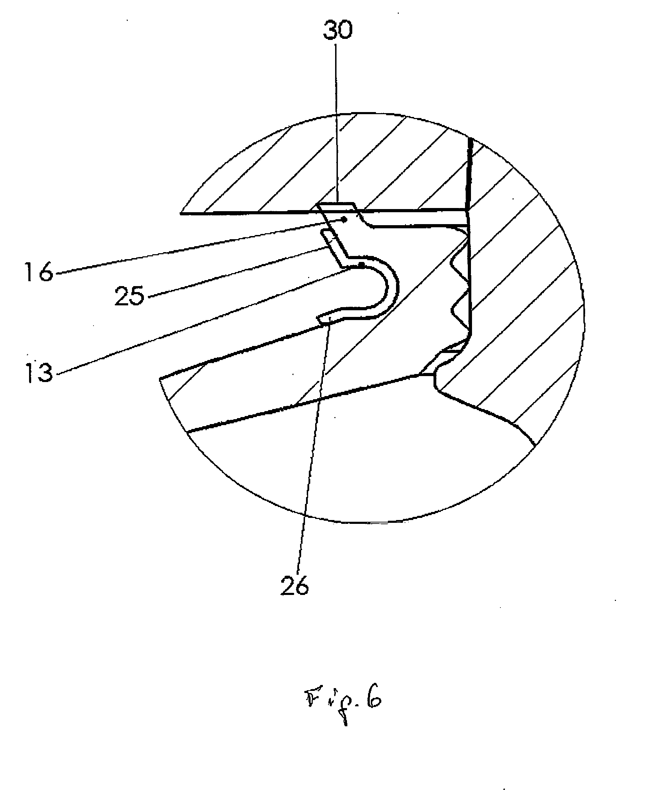

Während die in den voranstehenden Figuren beschriebenen Spannringe 13 aus einem Kunststoff im Spritzgießverfahren hergestellt sind, können die Spannringe 13 nach den Figuren 5 und 6 aus einem Blech im Biegeverfahren gebildet werden. Hierfür werden von einem Rohrstück aus Blech entsprechend lange Stücke abgelängt und diese sodann durch Biegen und Stauchen in die in den Figuren 5 und 6 im Querschnitt gezeigte Form gebracht. Dabei wird, wie in der Fig. 5 gezeigt, der Spannring 13 mit dem Kragen 25 und in der Fig. 6 mit dem Kragen 25 und der Verbreiterung 26 versehen. Alle anderen Teile der Fig. sind entsprechend der Fig. 2 ausgebildet.

Um die Dichtung gegenüber der Dichtfläche 9 besonders wirksam zu gestalten, ist die Staublippe 16 mit einer axialen Stützfläche 30 versehen, die parallel zur Gegenfläche 31 am Stützring 5 ausgerichtet ist Insgesamt gesehen, bekommt die Staublippe dann eine trapezartige Form.

## Patentansprüche

1. Einrichtung umfassend einen Dichtungsbalg (10), wobei eines der Enden (11) des Dichtungsbalgs (10) mit einem radialen und einem axialen Dichtbereich (8 und 9) an dem den radialen Dichtbereich (18) des Kugelzapfens (2) bildenden Abschnitt (41) des Konusteils (7) des Kugelzapfengelenks (1) befestigbar ist, wobei das Ende (11) des Dichtungsbalgs (10) auf seiner radialen Außenseite mit einer den Spannring (13) aufnehmenden Ringnut (20) versehen ist und von einem Spannelement (13) eingefasst ist, das als geschlossener Spannring (13) ausgebildet ist und mit seiner radial innen liegenden Oberfläche an die Form der Nut (20) angepasst ist, wobei der Spannring (13) mit einer außerhalb der Nut (20) liegenden und an den Dichtungsbalg angrenzenden Verbreiterung (26) versehen ist, **dadurch gekennzeichnet, dass** der Spannring mit einem Kragen versehen ist, welcher eine axiale Staublippe (16) des Dichtungsbalgs (10) radial und axial abstützt.

2. Einrichtung nach Anspruch 1, **dadurch gekennzeichnet, dass** der Kragen (25) und die Verbreiterung (26) an seinem bzw. ihren äußeren Rändern (28, 29) abgerundet sind.

3. Einrichtung nach einem der Ansprüche 1 oder 2, **dadurch gekennzeichnet, dass** der Nutgrund (21) der Ringnut (20) abgerundet ausgebildet ist.

4. Einrichtung nach Anspruch 1 bis 3, **dadurch gekennzeichnet, dass** der Nutgrund (21) halbkreisförmig ausgebildet ist.

5. Einrichtung nach einem der Ansprüche 1 bis 4, **dadurch gekennzeichnet, dass** der Spannring (13) im Querschnitt eine lang gestreckte Form hat, dessen Seitenwände (22, 23) parallel zueinander verlaufen.

6. Einrichtung nach einem der Ansprüche 1 bis 5, **dadurch gekennzeichnet, dass** der radiale Dichtbereich (8) des Dichtungsbalgs (10) mit radialen am zylindrischen Abschnitt (41) des Gelenkzapfens (4) anliegenden Dichtlippen (15) versehen ist.

7. Einrichtung nach einem der Ansprüche 1 bis 6, **dadurch gekennzeichnet, dass** der axiale Dichtbereich (9) des Dichtungsbalgs (10) wenigstens eine axial ausgerichtete, am Hebelauge (5) des Gelenks (4) anliegende Staublippe (16) hat.

8. Einrichtung nach einem der Ansprüche 1 bis 7, **dadurch gekennzeichnet, dass** die Staublippe (16) mit einer axialen Stützfläche (30) versehen ist, die parallel zur Gegenfläche (31) am Stützring (5) ausgerichtet ist.

9. Einrichtung nach einem der Ansprüche 1 bis 8, **dadurch gekennzeichnet, dass** die Staublippe (16) trapezartig ausgebildet ist.

10. Einrichtung nach einem der Ansprüche 1 bis 9, **dadurch gekennzeichnet, dass** der Spannring (13) aus einem Kunststoff besteht und im Spritzgießverfahren hergestellt ist.

11. Einrichtung nach einem der Ansprüche 1 bis 10, **dadurch gekennzeichnet, dass** der Spannring (13) als Schalenelement aus einem Blech im Biegeverfahren hergestellt ist.

## Claims

1. Device comprising a sealing bellows (10), it being possible for one of the ends (11) of the sealing bellows (10) to be fastened by way of a radial and an axial sealing region (8 and 9) to that section (41) of the cone part (7) of the ball pivot joint (1) which forms the radial sealing region (18) of the ball pivot (2), the end (11) of the sealing bellows (10) being provided on its radial outer side with an annular groove (20) which receives the clamping ring (13) and being enclosed by a clamping element (13) which is configured as a closed clamping ring (13) and is adapted with its surface which lies radially on the inside to the shape of the groove (20), the clamping ring (13) being provided with a widened portion (26) which lies outside the groove (20) and adjoins the sealing bellows, **characterized in that** the clamping ring is provided with a collar which supports an axial dust lip (16) of the sealing bellows (10) radially and axially.

2. Device according to Claim 1, **characterized in that** the collar (25) and the widened portion (26) are rounded at their outer edges (28, 29).

3. Device according to either of Claims 1 and 2, **characterized in that** the groove bottom (21) of the annular groove (20) is of rounded configuration.

4. Device according to Claims 1 to 3, **characterized in that** the groove bottom (21) is of semicircular configuration.

5. Device according to one of Claims 1 to 4, **characterized in that**, in cross section, the clamping ring (13) has an elongate shape, the side walls (22, 23) of which run parallel to one another.

6. Device according to one of Claims 1 to 5, **characterized in that** the radial sealing region (8) of the sealing bellows (10) is provided with radial sealing lips (15) which bear against the cylindrical section (41) of the joint pivot (4).

7. Device according to one of Claims 1 to 6, **characterized in that** the axial sealing region (9) of the sealing bellows (10) has at least one axially oriented dust lip (16) which bears against the lever eye (5) of the joint (4).

8. Device according to one of Claims 1 to 7, **characterized in that** the dust lip (16) is provided with an axial supporting face (30) which is oriented in parallel to the opposing face (31) on the supporting ring (5).

9. Device according to one of Claims 1 to 8, **characterized in that** the dust lip (16) is of trapezoidal configuration.

10. Device according to one of Claims 1 to 9, **characterized in that** the clamping ring (13) is composed of a plastic and is produced using the injection-moulding process.

11. Device according to one of Claims 1 to 10, **characterized in that** the clamping ring (13) is produced as a shell element from a metal sheet using the bending process.

## Revendications

1. Dispositif comprenant un soufflet d'étanchéité (10), l'une des extrémités (11) du soufflet d'étanchéité (10) pouvant être fixée par une région d'étanchéité radiale et une région d'étanchéité axiale (8 et 9) à la portion (41) de la partie conique (7) de l'articulation à rotule (1), formant la région d'étanchéité radiale (18) du tourillon à rotule (2), l'extrémité (11) du soufflet d'étanchéité (10) étant pourvue, sur son côté radial extérieur, d'une rainure annulaire (20) recevant la bague de serrage (13) et étant enserrée par un élément de serrage (13) qui est réalisé sous forme de bague de serrage fermée (13) et étant adapté, avec sa surface située radialement à l'intérieur, à la forme de la rainure (20), la bague de serrage (13) étant munie d'un élargissement (26) situé à l'extérieur de la rainure (20) et adjacent au soufflet d'étanchéité, **caractérisé en ce que** la bague de serrage est munie d'un collet qui supporte radialement et axialement une lèvre antipoussière axiale (16) du soufflet d'étanchéité (10).

2. Dispositif selon la revendication 1, **caractérisé en ce que** le collet (25) et l'élargissement (26) sont arrondis au niveau de leurs bords extérieurs (28, 29).

3. Dispositif selon l'une quelconque des revendications 1 ou 2, **caractérisé en ce que** la base de rainure (21) de la rainure annulaire (20) est réalisée sous forme arrondie.

4. Dispositif selon les revendications 1 à 3, **caractérisé en ce que** la base de rainure (21) est réalisée sous forme semi-circulaire.

5. Dispositif selon l'une quelconque des revendications 1 à 4, **caractérisé en ce que** la bague de serrage (13) présente une forme allongée en section transversale, dont les parois latérales (22, 23) s'étendent parallèlement l'une à l'autre.

6. Dispositif selon l'une quelconque des revendications 1 à 5, **caractérisé en ce que** la région d'étanchéité radiale (8) du soufflet d'étanchéité (10) est munie de lèvres d'étanchéité radiales (15) s'appliquant contre la portion cylindrique (41) du tourillon d'articulation (4).

7. Dispositif selon l'une quelconque des revendications 1 à 6, **caractérisé en ce que** la région d'étanchéité axiale (9) du soufflet d'étanchéité (10) présente au moins une lèvre antipoussière (16) orientée axialement, s'étendant sur l'oeil du levier (5) de l'articulation (4).

8. Dispositif selon l'une quelconque des revendications 1 à 7, **caractérisé en ce que** la lèvre antipoussière (16) est munie d'une face de support axiale (30) qui est orientée parallèlement à la surface conjuguée (31) sur la bague de support (5).

9. Dispositif selon l'une quelconque des revendications 1 à 8, **caractérisé en ce que** la lèvre antipoussière (16) est réalisée sous forme trapézoïdale.

10. Dispositif selon l'une quelconque des revendications 1 à 9, **caractérisé en ce que** la bague de serrage (13) se compose de matière plastique et est fabriquée suivant un procédé de moulage par injection.

11. Dispositif selon l'une quelconque des revendications 1 à 10, **caractérisé en ce que** la bague de serrage (13) est fabriquée sous forme d'élément formant coque à partir de tôle suivant un procédé de cintrage.
